# EUROPEAN PATENT SPECIFICATION

(11) **EP 3 057 408 B1**
(45) Date of publication and mention of the grant of the patent: **28.06.2017**
(21) Application number: 14793649.6
(22) Date of filing: 13.10.2014
(51) Int. Cl.: A01K 1/02, A01K 13/00

(54) **GATE ARRANGEMENT AND ANIMAL FEEDING STATION**
TORANORDNUNG UND TIERFÜTTERUNGSSTATION DAMIT
AGENCEMENT DE PORTE ET STATION D'ALIMENTATION POUR ANIMAL

(30) Priority: 14.10.2013 SE 1351215
(43) Date of publication of application: 24.08.2016
(73) Proprietor: DeLaval Holding AB, 147 21 Tumba (SE)
(72) Inventor: HABEK, Wojciech, S-147 21 Tumba (SE); JANISIOW, Marcin, S-147 21 Tumba (SE)
(74) Representative: Lilliehorn, Tobias
(86) International application number: PCT/SE2014/051208
(87) International publication number: WO 2015/057141

(56) References cited:
- WO-A1-2012/136216
- EA-A1- 200 970 802
- EA-A1- 201 001 519
- FR-A1- 2 505 136
- NL-C2- 1 016 183
- SU-A1- 1 780 661
- US-A- 3 785 346

## Description

### TECHNICAL FIELD

The present invention relates to animal feeding stations and to gate arrangements adapted to be used in animal feeding stations.

### BACKGROUND

Animal feeding stations adapted for feeding animals, such as livestock, with feed are known in the art. Such a feeding station commonly comprises a cubicle for accommodating one animal at a time. A feed dispensing arrangement of the animal feeding station is adapted to dispense a metered portion of feed to an animal in the feeding station.

Each animal of a herd has a daily ration of feed, such as concentrates, which is fed in metered portions in one or more animal feeding stations to the animals of the herd. Concentrates are highly desirable to livestock. Thus, higher ranked animals of the herd may try to scare lower ranked animals from the animal feeding station.

To ensure that an animal may feed without it being disturbed in an animal feeding station, the animal feeding station may be provided with a rear gate. The rear gate is closed after an animal has entered the animal feeding station. The rear gate is operated by pneumatic cylinders.

FR 2505136 discloses a cage including a manger and doors for isolating a feeding animal. A pivoting and sliding mechanism is provided for closing and opening the doors of the cage. The cage is specifically designed for swine. The use of a clapper made from a common metal tube, which is arranged to abut against a neck/back of an animal in the cage is not suited for use with cattle, since it chafes against the neck and/or back of cattle entering the cage and approaching the manger.

### SUMMARY

It is an object of the present invention to provide a robust and uncomplicated gate arrangement adapted to be used in an animal feeding station, and which is gentle to an animal actuating the gate arrangement, and thus is suited for use with livestock, in particular cattle.

According to an aspect of the invention, the object is achieved by a gate arrangement adapted to be used in an animal feeding station, the gate arrangement comprising a gate arranged to be pivotably suspended, and a gate actuation mechanism. The gate actuation mechanism comprises a linkage and an actuation member. The linkage connects the actuation member with the gate. The actuation member is arranged to be actuated by a neck and/or a back of an animal to pivot the gate via the linkage. The actuation member is suspended to pivot about a substantially horizontal first pivot axis. The actuation member comprises a rotatable member arranged to abut against the neck and/or the back of the animal. The rotatable member is arranged to rotate about a substantially horizontal second pivot axis.

Since an animal with its neck and/or back actuates the gate via the actuation member and the linkage, and the actuation member comprises a rotatable member, the rotatable member will follow in rotating contact with the neck and/or back of the animal as the animal approaches a feed dispensing arrangement at a front end of a relevant animal feeding station. In this manner the animal will easily and smoothly actuate the actuation member to pivot the gate via the linkage without chafing its neck and/or back. As a result, the above mentioned object is achieved. It is well known that milk producing cattle produce more milk if they feel well in their living environment, of which an animal feeding station forms an often visited part.

Since an animal with its neck and/or back actuates the gate via the actuation member and the linkage, no pneumatic cylinders or other external actuation devices are required in the animal feeding station according to the invention. The actuation member being actuated by the neck and/or the back of an animal, entails that there is only one main area of contact between the animal and the actuation member. Moreover, since the actuation member is suspended to pivot about a substantially horizontal first pivot axis, the actuation member will be pivoted upwardly by an animal entering a relevant animal feeding station.

An animal will bow its head as it approaches the feed dispensing arrangement of a relevant animal feeding station. It has been realized by the inventor that this natural tendency of the animal to bow its head may be taken advantage of for ensuring a contact between the neck and/or the back of the animal and the actuation member in an animal feeding station.

According to embodiments, the rotatable member may comprise bristles. In this manner not only chafing of the neck and/or back of an animal is avoided, but also massage of the neck and/or back of the animal may be provided in a relevant animal feeding station as the animal approaches a feeding dispensing arrangement at a front end of the animal feeding station. Thus, an agreeable feeling may be presented to the animal. Alternatively, the rotatable member may comprise a soft resilient material, such as rubber foam, or plastic foam, which may provide an agreeable feeling to the animal in the same manner as the embodiments comprising a rotatable member with bristles,

Since an animal visits the animal feeding station a number of times every day, the agreeable feeling provided by the rotatable member comprising bristles and/or a soft resilient material, may contribute to an increased milk production in milk producing cattle feeding from the animal feeding station.

As opposed to a brush hanging freely in a barn, the rotatable member bristled and/or a soft resilient material provided in an animal feeding station is provided within the confined space provided by the feeding station and the gate of the gate arrangement. Thus, an individual cattle will be massaged by the rotatable member protected within the animal feeding station. Accordingly, lower ranked cattle individuals within a herd may be massaged by the rotatable member without being disturbed by higher ranked animals, as may be the case when the lower ranked animal is brushing against a brush hanging freely in the barn.

According to embodiments, the linkage may comprise a resilient member. In this manner the linkage may flex. Besides accommodating for animals of different lengths in a relevant animal feeding station, the resilient member also provides a safety feature preventing other animals or humans from being jammed by the gate. Thus, in addition to the gentle treatment of the animal neck and back by the rotatable member, a gentle adaptation to the length of a relevant animal in the anima! feeding station may be provided. Accordingly, a particularly animal friendly gate arrangement may be provided.

According to embodiments, the gate may comprise a lever and may be pivotable about a substantially vertical third axis. The lever may be connected to the linkage, and the linkage may be connected to the actuation member between the first pivot axis and the second pivot axis. In this manner an actuation of the actuation member may be transferred via the linkage to the gate to pivot the gate about the third axis.

According to embodiments, the gate arrangement may comprise a further gate arranged to be pivotably suspended. The gate actuation mechanism may comprises a further linkage and the further linkage may connect the actuation member with the further gate, In this manner two gates actuated by the actuation member may be provided at a relevant animal feeding station.

According to a further aspect of the invention, there is provided an animal feeding station having a front end and a rear end, the feeding station comprising a feed dispensing arrangement arranged at the front end, a first side section and a second side section extending at a distance from each other, from the feed dispensing arrangement to the rear end defining there between a single animal feeding space. The animal feeding station comprises a gate arrangement according to aspects and/or embodiments disclosed herein.

According to embodiments, the gate arrangement of the animal feeding station may comprise one gate only.

According to other embodiments, the gate arrangement of the animal feeding station may comprise two gates as disclosed in some embodiments herein.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates embodiments of an animal feeding station comprising a gate arrangement,
Fig. 2 illustrates the embodiments of the animal feeding station of Fig. 1 with a gate in a closed position,
Fig. 3 illustrates a side view of the animal feeding station and the gate arrangement of Figs. 1 and 2,
Fig. 4 illustrates a partial top view of a rear end of the animal feeding station and the gate arrangement of Figs. 1 - 3,
Fig. 5 illustrates embodiments of a linkage of a gate arrangement to be used in an animal feeding station,
Fig. 6 illustrates a cross section through embodiments of a resilient member of the linkage illustrated in Fig. 5,
Fig. 7 illustrates embodiments of an animal feeding station comprising a gate arrangement, and
Fig. 8 illustrates a rotatable member according to embodiments.

### DETAILED DESCRIPTION

In the context of various embodiments of animal feeding stations, aspects of the present invention relating on the one hand to embodiments of animal feeding stations, and on the other hand to embodiments of gate arrangements adapted to be used in animal feeding stations, will now be described more fully. Like numbers refer to like elements throughout. Well-known functions or constructions will not necessarily be described in detail for brevity and/or clarity.

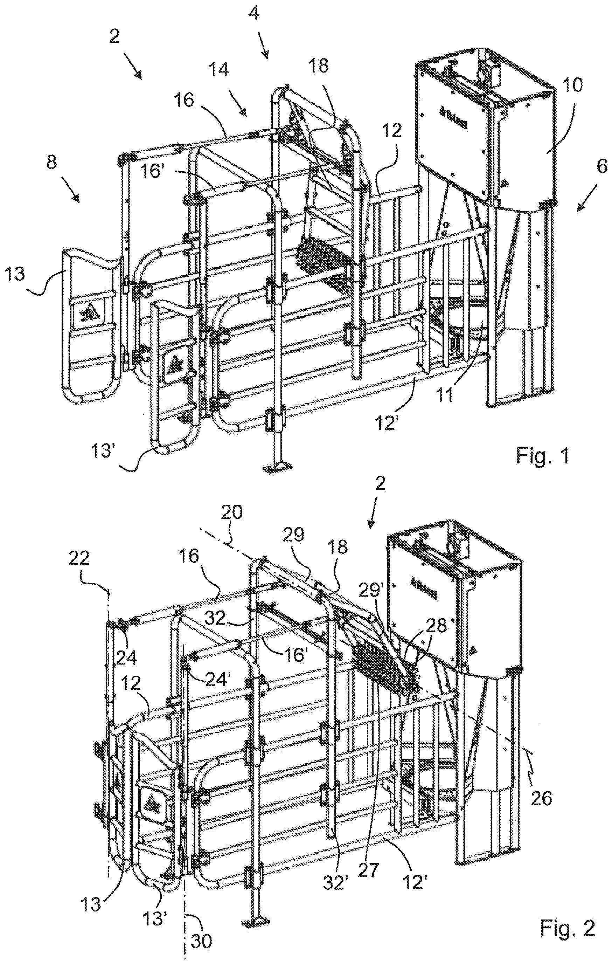

**Fig. 1** illustrates embodiments of an animal feeding station 2 comprising a gate arrangement 4. The animal feeding station 2 has a front end 6 and a rear end 8. The animal feeding station 2 comprises a feed dispensing arrangement 10 arranged at the front end 6. The feed dispensing arrangement 10 comprises a feed trough 11. A first side section 12 and a second side section 12' extend at a distance from each other from the feed dispensing arrangement 10 to the rear end 8 defining there between a single animal feeding space.

The gate arrangement 4 comprises a gate 13 pivotably suspended at the rear end 8 of the animal feeding station 2, and a gate actuation mechanism 14. The gate actuation mechanism 14 comprises a linkage 16 and an actuation member 18. The linkage 16 connects the actuation member 18 with the gate 13. The actuation member 18 is arranged to be actuated by a neck and/or a back of an animal in the animal feeding station to pivot the gate 13 via the linkages 16 to close the gate 13.

In Fig. 1 the gate 13 is illustrated in an open position.

**Fig. 2** illustrates the embodiments of the animal feeding station 2 of Fig. 1 with the gate 13 illustrated in a closed position, as pivoted by the linkage 16 and the actuation member 18 by a neck and/or a back of a non-shown animal in the animal feeding station 2. In the following reference will be made to both Fig. 2 and Fig. 1.

The actuation member 18 is suspended to pivot about a substantially horizontal first pivot axis 20. The first pivot axis 20 is arranged above animal height in the animal feeding station 2. As shown in Fig. 2 the actuation member 18 has been pivoted upwardly by the non-shown animal in the animal feeding station 2. The gate 13 is pivotable about a substantially vertical third axis 22. The gate 13 comprises a lever 24, which lever 24 when actuated pivots the gate 13 about the substantially vertical third axis 22. The lever 24 is connected to the linkage 16. The linkage 16 is connected to the actuation member 18 between the first pivot axis 20 and a second pivot axis 26. The second pivot axis 26 relates to a rotatable member 27 of the actuation member 18.

An actuation of the actuation member 18 is transferred via the linkage 16 to the gate 13 to pivot the gate about the third axis 22. The gate 13 is closed by an animal when it lifts the actuation member 18 with its neck and/or back to pivot about the first pivot axis 20. The gate 13 is opened when the animal backs out of the animal feeding station 2. In this situation gravity and the weight of the actuation member 18 forces the gate 13 to open.

As mentioned above, the actuation member 18 comprises a rotatable member 27. The rotatable member 27 is arranged to abut against the neck and/or the back of an animal in the animal feeding station 2. The rotatable member 27 is arranged to rotate about the substantially horizontal second pivot axis 26. The actuation member 18 comprises bar members 29, 29' extending between the first pivot axis 20 and the second pivot axis 26.

The rotatable member 27 comprises bristles 28. The bristles 28 will provide an agreeable feeling to the animal and provide a certain degree of resilience to the rotatable member 27 and the actuation member 18. According to example embodiments, the bristles 28 may be made from a nylon material, such as nylon pa6, having a diameter within a range of 0,8 - 1,5 mm and a length within a range of 20 - 50 mm. It has been found that such bristles are durable enough to stand the strain over longer periods of time as the rotatable member 27 is subjected to animals bearing with their necks and/or the backs against of the rotatable member 27.

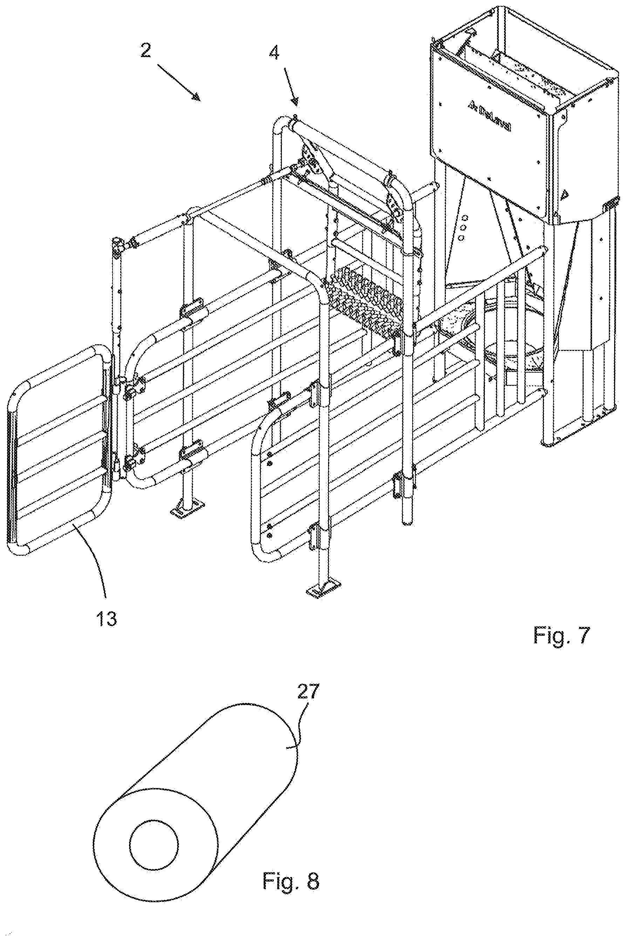

A rotatable member 27 according to alternative embodiments is illustrated in Fig. 8. The rotatable member 27 comprises a soft resilient material. For instance, the rotatable member 27 may comprise a cylinder made from a rubber foam material or a plastic foam material.

Returning to Figs. 1 and 2, the gate arrangement 4 comprises a further gate 13' pivotably suspended at the rear end 8 of the animal feeding station 2. The gate actuation mechanism 14 comprises a further linkage 16'. The further linkage 16' connects the actuation member 18 with the further gate 13'. Both gates 13, 13' are thus actuated by the actuation member 18.

The further gate 13' comprises a further lever 24' and is pivotable about a substantially vertical fourth axis 30. The further lever 24' is connected to the further linkage 16'.

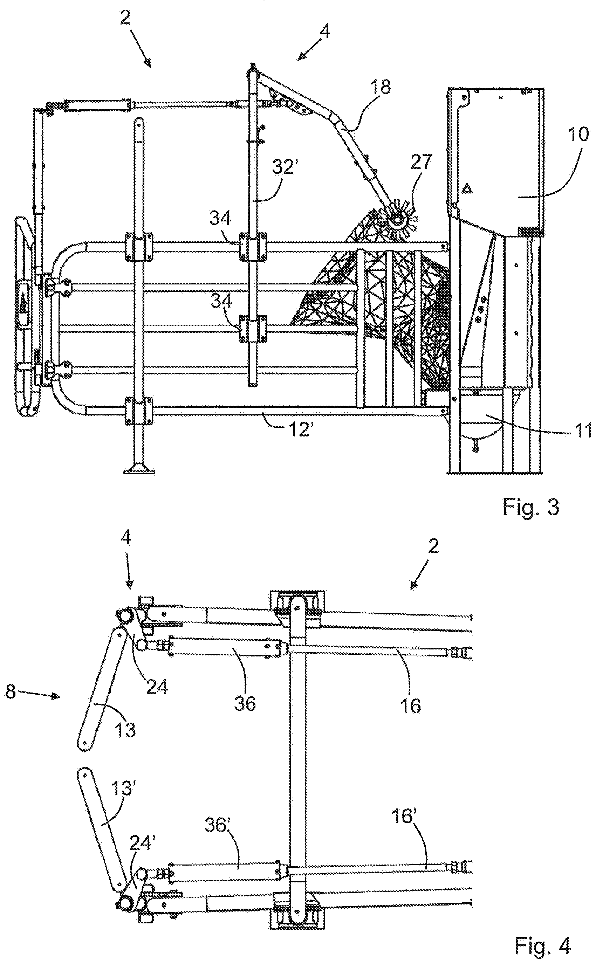

**Fig. 3** illustrates a side view of the animal feeding station 2 and the gate arrangement 4 of Figs. 1 and 2. A head and neck portion of an animal feeding from the feed trough 11 is illustrated in Fig. 3. An abutment between the rotatable member 27 of the actuation member 18 and the neck of the animal is clearly shown in Fig. 3.

The gate arrangement 4 comprises a first bar 32 and a second bar 32', see also Fig. 2, arranged at a distance from each other. The actuation member 18 is suspended from the first bar 32 and the second bar 32'. The first pivot axis 20 extends between the first bar 32 and the second bar 32'. The first bar 32 is connected to the first side section 12 and the second 32' bar is connected to the second side section 12'. The gate 13 is pivotably connected at the rear end 8 of the animal feeding station 2.

The first bar 32 and the second bar 32' are adjustable in height. Thus, the gate arrangement 4 may be adjusted in size to suit animals of a particular herd or breed. For this purpose the first and second bars 32, 32' are connected with brackets 34 to the first and second side sections 12, 12'. Also other dimensions of the gate arrangement 4 may be adjustable for the same reason. The height of the levers 24, 24' above the ground may be adjustable. The first and second bars 32, 32', by means of the brackets 34, may the adjustable in forward and rearward directions. The linkages 16, 16' may be adjustable in length, as well as the actuation member 18. Once the brackets 34 are tightened, the first and second bars 32, 32' are fixedly connected to the first and second side sections 12, 12'.

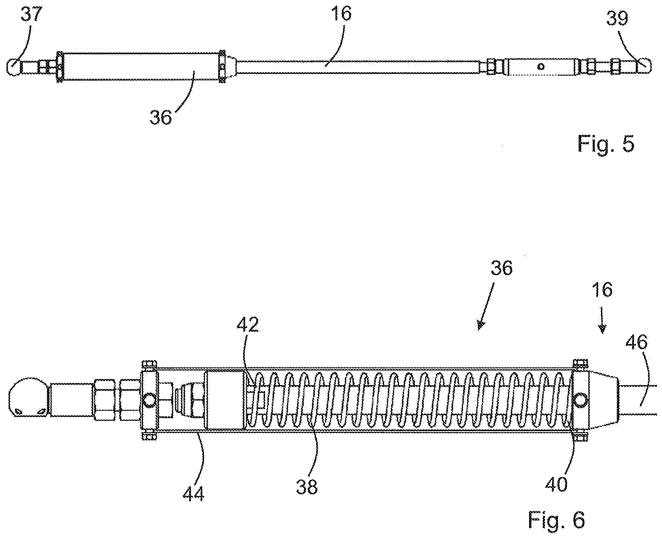

The first and second bars 32, 32' are fixedly connected to the first and second side sections 12, 12'. Due to a resilient member 36 of the linkage 16, discussed further with reference to Figs. 5 and 6 below, an adaptation of an animal space within the feeding station 2 to animals of different lengths in the animal feeding station 2 may be provided. No sliding connection of the actuation member 18 to the first and second side sections 12, 12' is required as in the cage disclosed in FR 2505136.

Provided purely as an example, the following main dimensions are mentioned: The first and second bars 32, 32', and thus also the first pivot axis 20, may be arranged at a horizontal distance of 9 - 120 cm from the rear end of the animal feeding station. The first pivot axis 20 may be arranged at a height of 180 - 200 cm above ground level. A distance between the first pivot axis 20, about which the actuation member 18 pivots, and the second pivot axis 26, about which the rotatable member 27 rotates, may be 70 - 135 cm. The rotatable member 27 may have a diameter of 10 - 30 cm. The actuation member 18 may be pivoted 40 - 60 degrees from a vertical direction towards the feed dispensing arrangement 10 to close the gate 13.

**Fig. 4** illustrates a partial top view of the rear end 8 of the animal feeding station 2 and the gate arrangement 4 of Figs. 1 - 3. The connection between the levers 24, 24'of the gates 13, 13' and the linkages 16, 16' is clearly shown in Fig. 4.
The linkage 16 comprises a resilient member 36. Similarly, the further linkage 13' comprises a further resilient member 36'. See further below with reference to Figs. 5 and 6.

**Fig. 5** illustrates embodiments of a linkage 16 of a gate arrangement to be used in an animal feeding station. At a first end 37 of the linkage 16, the linkage 16 is adapted to be pivotably connected to a gate of the gate arrangement, and at a second end 39 the linkage 16 is adapted to be pivotably connected to an actuation member of the gate arrangement. Alternatively, the first end 37 of the linkage 16 is adapted to be pivotably connected to the actuation member, and at the second end 39 the linkage 16 is adapted to be pivotably connected to the gate. The linkage 16 comprises a resilient member 36.

**Fig**. **6** illustrates a cross section through embodiments of a resilient member 36 of the linkage 16 illustrated in Fig. 5. The resilient member 36 comprises a spring 38. A first end 40 of the spring 38 is connected with the gate 13 and a second end 42 of the spring 38 is connected with the actuation member 18. Alternatively, the first end 40 of the spring 38 is connected with the actuation member 18 and a second end 42 of the spring 38 is connected with the gate 13. More specifically, the spring 38 comprises a spiral spring 38 and the linkage 16 comprises a cylinder 44 and an arm 46, the cylinder 44 extending around and along the spiral spring 38 and being connected to the first end 40 of the spiral spring 38. The arm 46 extends through the spiral spring 38 and the cylinder 44 and is connected to the second end 42 of the spiral spring 38. The cylinder 44 is connected to the gate 13 and the arm 46 is connected to the actuation member 18. Alternatively, the cylinder 44 is connected to the actuation member 18 and the arm 46 is connected to the gate 13.

In operation, the spiral spring 38 may be compressed inside the cylinder 44 by the arm 46 moving in a direction out of the cylinder 44. The linkage 16 may thus be resiliently extended in length. Accordingly, a gate of the gate arrangement being connected to the linkage 16, may resiliently pivot about its substantially vertical third or fourth axis.

**Fig**. **7** illustrates embodiments of an animal feeding station 2 comprising a gate arrangement 4. The gate arrangement 4 comprises one gate 13 only. Other features of these embodiments find correspondence in the embodiments discussed in connection with in Figs. 1 - 6.

This invention should not be construed as limited to the embodiments set forth herein. A person skilled in the art will realize that different features of the embodiments disclosed herein may be combined to create embodiments other than those described herein, without departing from the scope of the present invention, as defined by the appended claims. For instance, the gate 13 may be pivotable about a horizontal axis arranged at a height above the animal instead of about a vertical axis. Although the invention has been described with reference to example embodiments, many different alterations, modifications and the like will become apparent for those skilled in the art. Therefore, it is to be understood that the foregoing is illustrative of various example embodiments and that the invention is defined only by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A gate arrangement (4) adapted to be used in an animal feeding station (2), the gate arrangement (4) comprising a gate (13) arranged to be pivotably suspended, and a gate actuation mechanism (14), wherein the gate actuation mechanism (14) comprises a linkage (16) and an actuation member (18), wherein the linkage (16) connects the actuation member (18) with the gate (13), wherein the actuation member (18) is arranged to be actuated by a neck and/or a back of an animal to pivot the gate (13) via the linkage (16), and wherein the actuation member (18) is suspended to pivot about a substantially horizontal first pivot axis (20), **characterised in that**
the actuation member (18) comprises a rotatable member (27) arranged to abut against the neck and/or the back of the animal, the rotatable member (27) being arranged to rotate about a substantially horizontal second pivot axis (26).

2. The gate arrangement (4) according to claim 1, wherein the rotatable member (27) comprises bristles (28), preferably bristles made from nylon having a diameter within a range of 0,8 - 1,5 mm and a length within a range of 20 - 50 mm.

3. The gate arrangement (4) according to claim 1, wherein the rotatable member comprises a soft resilient material.

4. The gate arrangement (4) according to any one of the preceding claims, comprising a first bar (32) and a second bar (32') arranged at a distance from each other, wherein the actuation member (18) is suspended from the first bar (32) and the second bar(32'), the first pivot axis (20) extending between the first bar (32) and the second bar (32').

5. The gate arrangement (4) according to claim 4, wherein the first bar (32) and the second bar (32') are adjustable in height.

6. The gate arrangement (4) according to any one of the preceding claims, wherein the linkage (16) comprises a resilient member (36).

7. The gate arrangement (4) according to claim 6, wherein the resilient member (36) comprises a spring (38), and wherein a first end (40) of the spring (38) is connected with the gate (13) and a second end (42) of the spring (38) is connected with the actuation member (18), or wherein the first end (40) of the spring (38) is connected with the actuation member (18) and a second end (42) of the spring (38) is connected with the gate (13).

8. The gate arrangement (4) according to claim 7, wherein the spring (38) comprises a spiral spring (38) and the linkage (16) comprises a cylinder (44) and an arm (46), the cylinder (44) extending around and along the spiral spring (38) and being connected to the first end (40) of the spiral spring (38), wherein the arm (46) extends through the spiral spring (38) and the cylinder (44) and is connected to the second end (42) of the spiral spring (38), and wherein the cylinder (44) is connected to the gate (13) and the arm (46) is connected to the actuation member (18), or wherein the cylinder (44) is connected to the actuation member (18) and the arm (46) is connected to the gate (13).

9. The gate arrangement (4) according to any one of the preceding claims, wherein the gate (13) comprises a lever (24) and is pivotable about a substantially vertical third axis (22), the lever (24) being connected to the linkage (16), and wherein the linkage (16) is connected to the actuation member (18) between the first pivot axis (20) and the second pivot axis (26).

10. The gate arrangement (4) according to any one of the preceding claims, comprising a further gate (13') arranged to be pivotably suspended, wherein the gate actuation mechanism (14) comprises a further linkage (16'), and wherein the further linkage (16') connects the actuation member (18) with the further gate (13').

11. The gate arrangement (4) according to claim 10, wherein the further gate (13') comprises a further lever (24') and is pivotable about a substantially vertical fourth axis (30), the further lever (24') being connected to the further linkage (16').

12. The gate arrangement (4) according to claim 10 or 11, wherein further linkage (16') comprises a further resilient member (36').

13. An animal feeding station (2) having a front end and (6) a rear end (8), the animal feeding station (2) comprising a feed dispensing arrangement (10) arranged at the front end (6), a first side section (12) and a second side section (12') extending at a distance from each other from the feed dispensing arrangement (10) to the rear end (8) defining there between a single animal feeding space,
**characterized in that** the animal feeding station (2) comprises a gate arrangement (4) according to any one of claims 1 - 9.

14. The animal feeding station (2) according to claim 13, wherein the gate arrangement (4) comprises one gate (13) only.

15. The animal feeding station (2) according to claim 13, comprising the gate arrangement (4) according to any one of claims 10 - 12.

## Patentansprüche

1. Toranordnung (4), die so ausgelegt ist, dass sie in einer Tierfütterungsstation (2) eingesetzt wird, wobei die Toranordnung (4) ein Tor (13) umfasst, das so angeordnet ist, dass es schwenkbar aufgehängt wird, sowie einen Torbetätigungsmechanismus (14), wobei der Torbetätigungsmechanismus (14) eine Verbindung (16) und ein Betätigungsglied (18) umfasst, wobei die Verbindung (16) das Betätigungsglied (18) mit dem Tor (13) verbindet, wobei das Betätigungsglied (18) so angeordnet ist, dass es mit einem Hals und/oder einem Rücken eines Tiers betätigt wird, damit das Tor (13) über die Verbindung (16) geschwenkt wird, und wobei das Betätigungsglied (18) so aufgehängt ist, dass es um eine im Wesentlichen waagerechte erste Schwenkachse (20) schwenkt, **dadurch gekennzeichnet, dass**
das Betätigungsglied (18) ein drehbares Glied (27) umfasst, das so angeordnet ist, dass es an den Hals und/oder den Rücken des Tiers anstößt, wobei das drehbare Glied (27) so angeordnet ist, dass es um eine im Wesentlichen waagerechte zweite Schwenkachse (26) schwenkt.

2. Toranordnung (4) nach Anspruch 1, wobei das drehbare Glied (27) Borsten (28), vorzugsweise Borsten aus Nylon mit einem Durchmesser im Bereich von 0,8 bis 1,5 mm und einer Länge im Bereich von 20 bis 50 mm umfasst.

3. Toranordnung (4) nach Anspruch 1, wobei das drehbare Glied ein weiches elastisches Material umfasst.

4. Toranordnung (4) nach einem der vorhergehenden Ansprüche, die eine erste Stange (32) und eine zweite Stange (32') umfasst, die mit einem Abstand zueinander angeordnet sind, wobei das Betätigungsglied (18) an der ersten Stange (32) und der zweiten Stange (32') aufgehängt ist, wobei die erste Schwenkachse (20) zwischen der ersten Stange (32) und der zweiten Stange (32') verläuft.

5. Toranordnung (4) nach Anspruch 4, wobei die erste Stange (32) und die zweite Stange (32') höhenverstellbar sind.

6. Toranordnung (4) nach einem der vorhergehenden Ansprüche, wobei die Verbindung (16) ein elastisches Glied (36) umfasst.

7. Toranordnung (4) nach Anspruch 6, wobei das elastische Glied (36) eine Feder (38) umfasst, und wobei ein erstes Ende (40) der Feder (38) mit dem Tor (13) verbunden ist und ein zweites Ende (42) der Feder (38) mit dem Betätigungsglied (18) verbunden ist, oder wobei das erste Ende (40) der Feder (38) mit dem Betätigungsglied (18) verbunden ist und ein zweites Ende (42) der Feder (38) mit dem Tor (13) verbunden ist.

8. Toranordnung (4) nach Anspruch 7, wobei die Feder (38) eine Schraubenfeder (38) umfasst und die Verbindung (16) einen Zylinder (44) und einen Arm (46) umfasst, wobei der Zylinder (44) um die und entlang der Schraubenfeder (38) verläuft und mit dem ersten Ende (40) der Schraubenfeder (38) verbunden ist, wobei der Arm (46) durch die Schraubenfeder (38) und den Zylinder (44) verläuft und mit dem zweiten Ende (42) der Schraubenfeder (38) verbunden ist, und wobei der Zylinder (44) mit dem Tor (13) verbunden ist und der Arm (46) mit dem Betätigungsglied (18) verbunden ist, oder wobei der Zylinder (44) mit dem Betätigungsglied (18) verbunden ist und der Arm (46) mit dem Tor (13) verbunden ist.

9. Toranordnung (4) nach einem der vorhergehenden Ansprüche, wobei das Tor (13) einen Hebel (24) umfasst und um eine im Wesentlichen senkrechte dritte Achse (22) herum schwenkbar ist, wobei der Hebel (24) mit der Verbindung (16) verbunden ist, und wobei die Verbindung (16) mit dem Betätigungsglied (18) zwischen der ersten Schwenkachse (20) und der zweiten Schwenkachse (26) verbunden ist.

10. Toranordnung (4) nach einem der vorhergehenden Ansprüche, die ein weiteres Tor (13') umfasst, das so angeordnet ist, dass es schwenkbar aufgehängt ist, wobei der Torbetätigungsmechanismus (14) eine weitere Verbindung (16') umfasst und wobei die weitere Verbindung (16') das Betätigungsglied (18) mit dem weiteren Tor (13') verbindet.

11. Toranordnung (4) nach Anspruch 10, wobei das weitere Tor (13') einen weiteren Hebel (24') umfasst und um eine im Wesentlichen senkrechte vierte Achse (30) herum schwenkbar ist, wobei der weitere Hebel (24') mit der weiteren Verbindung (16') verbunden ist.

12. Toranordnung (4) nach Anspruch 10 oder 11, wobei die weitere Verbindung (16') ein weiteres elastisches Glied (36') umfasst.

13. Tierfütterungsstation (2) mit einem vorderen Ende (6) und einem hinteren Ende (8), wobei die Tierfütterungsstation (2) eine Futterdosieranordnung (10) umfasst, die an dem vorderen Ende (6) angeordnet ist, wobei ein erster Seitenabschnitt (12) und ein zweiter Seitenabschnitt (12') mit einem Abstand zueinander von der Futterdosieranordnung (10) zum hinteren Ende (8) verlaufen und so dazwischen einen Fütterungsraum für ein einzelnes Tier definieren, **dadurch gekennzeichnet, dass** die Tierfütterungsstation (2) eine Toranordnung (4) nach einem der Ansprüche 1 bis 9 umfasst.

14. Tierfütterungsstation (2) nach Anspruch 13, wobei die Toranordnung (4) lediglich ein Tor (13) umfasst.

15. Tierfütterungsstation (2) nach Anspruch 13, die die Toranordnung (4) nach einem der Ansprüche 10 bis 12 umfasst.

## Revendications

1. Agencement de porte (4) conçu pour être mis en oeuvre dans une station d'alimentation pour animal (2), l'agencement de porte (4) comprenant une porte (13) agencée pour être suspendue pivotante et un mécanisme d'actionnement de porte (14), ledit mécanisme d'actionnement de porte (14) comprenant une liaison (16) et un élément d'actionnement (18), ladite liaison (16) reliant l'élément d'actionnement (18) à la porte (13), ledit élément d'actionnement (18) étant agencé pour être actionné par le cou et/ou le dos d'un animal afin de faire pivoter la porte (13) par le biais de la liaison (16), et ledit élément d'actionnement (18) étant suspendu de manière à pivoter sur un premier axe de pivotement (20) sensiblement horizontal, **caractérisé en ce que**
l'élément d'actionnement (18) comprend un élément rotatif (27) agencé pour être au contact du cou et/ou du dos de l'animal, l'élément rotatif (27) étant agencé pour tourner sur un deuxième axe de pivotement (26) sensiblement horizontal.

2. Agencement de porte (4) selon la revendication 1, dans lequel l'élément rotatif (27) comprend des poils de brosse (28), de préférence des poils de brosse en nylon présentant un diamètre compris dans la plage de 0,8 à 1,5 mm et une longueur comprise dans la plage de 20 à 50 mm.

3. Agencement de porte (4) selon la revendication 1, dans lequel l'élément rotatif comprend une matière souple douce.

4. Agencement de porte (4) selon l'une quelconque des revendications précédentes, comprenant une première barre (32) et une seconde barre (32') agencées à distance l'une de l'autre, l'élément d'actionnement (18) étant suspendu à la première barre (32) et à la seconde barre (32'), le premier axe de pivotement (20) s'étendant entre la première barre (32) et la seconde barre (32').

5. Agencement de porte (4) selon la revendication 4, dans lequel la première barre (32) et la seconde barre (32') sont réglables en hauteur.

6. Agencement de porte (4) selon l'une quelconque des revendications précédentes, dans lequel la liaison (16) comprend un élément élastique (36).

7. Agencement de porte (4) selon la revendication 6, dans lequel l'élément élastique (36) comprend un ressort (38), et dans lequel une première extrémité (40) du ressort (38) est reliée à la porte (13) et une seconde extrémité (42) du ressort (38) est reliée à l'élément d'actionnement (18), ou dans lequel la première extrémité (40) du ressort (38) est reliée à l'élément d'actionnement (18) et une seconde extrémité (42) du ressort (38) est reliée à la porte (13).

8. Agencement de porte (4) selon la revendication 7, dans lequel le ressort (38) comprend un ressort hélicoïdal (38) et la liaison (16) comprend un cylindre (44) et un bras (46), le cylindre (44) s'étendant autour et sur la longueur du ressort hélicoïdal (38) et étant relié à la première extrémité (40) du ressort hélicoïdal (38), ledit bras (46) traversant le ressort hélicoïdal (38) et le cylindre (44) et étant relié à la seconde extrémité (42) du ressort hélicoïdal (38), et dans lequel le cylindre (44) est relié à la porte (13) et le bras (46) est relié à l'élément d'actionnement (18), ou dans lequel le cylindre (44) est relié à l'élément d'actionnement (18) et le bras (46) est relié à la porte (13).

9. Agencement de porte (4) selon l'une quelconque des revendications précédentes, dans lequel la porte (13) comprend un levier (24) et peut pivoter sur un troisième axe (22) sensiblement vertical, le levier (24) étant relié à la liaison (16) et ladite liaison (16) étant reliée à l'élément d'actionnement (18) entre le premier axe de pivotement (20) et le deuxième axe de pivotement (26).

10. Agencement de porte (4) selon l'une quelconque des revendications précédentes, comprenant une porte supplémentaire (13') agencée pour être suspendue pivotante, dans lequel le mécanisme d'actionnement de porte (14) comprend une liaison supplémentaire (16'), ladite liaison supplémentaire (16') reliant l'élément d'actionnement (18) à la porte supplémentaire (13').

11. Agencement de porte (4) selon la revendication 10, dans lequel la porte supplémentaire (13') comprend un levier supplémentaire (24') et peut pivoter sur un quatrième axe (30) sensiblement vertical, le levier supplémentaire (24') étant relié à la liaison supplémentaire (16').

12. Agencement de porte (4) selon la revendication 10 ou 11, dans lequel la liaison supplémentaire (16') comprend un élément élastique supplémentaire (36').

13. Station d'alimentation pour animal (2) présentant une extrémité avant (6) et une extrémité arrière (8), la station d'alimentation pour animal (2) comprenant un agencement distributeur de nourriture (10) agencé à l'extrémité avant (6), une première section latérale (12) et une seconde section latérale (12') s'étendant à distance l'une de l'autre à partir de l'agencement distributeur de nourriture (10) jusqu'à l'extrémité arrière (8) en définissant entre elles un espace destiné à l'alimentation d'un seul animal,
**caractérisée en ce que** la station d'alimentation pour animal (2) comprend un agencement de porte (4) selon l'une quelconque des revendications 1 à 9.

14. Station d'alimentation pour animal (2) selon la revendication 13, dans laquelle l'agencement de porte (4) comprend une seule porte (13).

15. Station d'alimentation pour animal (2) selon la revendication 13, comprenant l'agencement de porte (4) selon l'une quelconque des revendications 10 à 12.
